(19) Europäisches Patentamt
European Patent Office
Office européen des brevets

(11) Numéro de publication: **0 181 800**
**B1**

(12) # FASCICULE DE BREVET EUROPÉEN

(45) Date de publication du fascicule du brevet: **27.04.88**

(51) Int. Cl.⁴: **C 10 G 27/10**, B 01 J 31/18

(21) Numéro de dépôt: **85402045.0**

(22) Date de dépôt: **22.10.85**

(54) **Procédé d'adoucissement des coupes pétrolières effectué en absence de composé alcalin.**

(30) Priorité: **09.11.84 FR 8417228**

(43) Date de publication de la demande: **21.05.86 Bulletin 86/21**

(45) Mention de la délivrance du brevet: **27.04.88 Bulletin 88/17**

(84) Etats contractants désignés: **DE GB IT NL**

(56) Documents cité:
**US-A-3 565 959**
**US-A-4 098 681**

**INORGANICA CHIMICA ACTA, vol. 3, no. 4, décembre 1969, pages 585-590, Lausanne, CH; M. NONOYAMA et al.: "The bivalent nickel, cobalt, copper and palladium complexes of n-methyl derivatives of pyridine-2-carboxamide"**
**INORGANICA CHIMICA ACTA, vol. 33, 1979, pages 227-234, Elsevier Sequoia SA, Laussanne, CH; R.L. CHAPMAN et al.: "Studies on the metal-amide bond. I. Metal complexes of the bis-amide tetradentate ligand N,N'-bis(2'-pyridine-carboxamide)-1,2-benzene"**

(73) Titulaire: **INSTITUT FRANCAIS DU PETROLE, 4, Avenue de Bois- Préau, F-92502 Rueil- Malmaison (FR)**

(72) Inventeur: **Mimoun, Hubert, 34, rue Hippolyte Bisson, F-92500 Rueil- Malmaison (FR)**
Inventeur: **Bonnaudet, Serge, 4, rue de Cheroy, F-75017 Paris (FR)**
Inventeur: **Saussine, Lucien, 2, Place des frères Tissandier, F-78290 Croissy- sur- Seine (FR)**
Inventeur: **Franck, Jean- Pierre, 24, avenue Ivan Tourgueneff, F-78300 Bougival (FR)**



Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

LIBER, STOCKHOLM 1988

**Description**

La présente invention concerne l'adoucissement d'une charge d'hydrocarbures contenant des produits soufrés et concerne en particulier l'oxydation des mercaptans en disulfures, de préférence en l'absence de composés d'alcalin, et en présence de complexes catalytiques de nature particulière.

On connaît la grande application qui est faite industriellement de la propriété que possèdent les chélates de certains métaux de transition tels que le cuivre, le cobalt, le vanadium, le nickel, de catalyser la transformation des mercaptans en disulfures en présence d'oxygène atmosphérique. Cette propriété est mise en oeuvre, par exemple en présence de la phtalocyanine de cobalt sulfonée, pour adoucir, en phase liquide aquo-alcaline, les gaz liquéfies, les essences naturelles ou de craquaqe, les naphtas, ou les solvants de toute composition. Un tel procédé est décrit par exemple dans les brevets US-A-2 966 453, US-A-2 882 224, US-A-2 988 500 selon lesquels la solution alcaline contenant par exemple comme catalyseur une phtalocyanine de cobalt sulfonée sert à extraire les mercaptans du carburant et à les oxyder en disulfures par l'air en phase aqueuse. Il est également possible de procéder à cet adoucissement en utilisant un catalyseur d'oxydation fixé sur un support insoluble dans la soude et les hydrocarbures. Un tel procédé est décrit par exemple dans les brevets FR-A-1 301 844 ou US-A-2 988 500 selon lesquels la charge hydrocarbonée est mise en contact avec un lit fixe de phtalocyanine de cobalt sur charbon actif, en présence d'air et d'un réactif alcalin.

Bien que ces procédés soient largement utilisés dans l'industrie du raffinage pétrolier, ils présentent l'inconvénient majeur de consommer de grandes quantités de solution aqueuse de soude laquelle se retrouve polluée au cours de l'opération d'adoucissement par des produits divers tels que les acides naphténiques, les phénols, l'hydrogène sulfuré, les produits azotés, etc... Le recyclage de ces solutions de soude polluées est une opération difficile, et leur élimination pose des problèmes écologiques pour l'environnement.

On a maintenant découvert que certains chélates métalliques contenant des ligands multidentés à fonction amide peuvent être fixés très avantageusement sur support solide et être ainsi utilisables efficacement pour l'adoucissement des fractions pétrolières sans que la présence d'alcali ne soit nécessaire.

Les complexes utilisables dans la présente invention sont constitués par des chélates de métaux de transition qui sont choisis de préférence, dans le groupe des métaux notamment constitué par le cobalt, le nickel le fer, le cuivre, le manganèse avec au moins un ligand multidenté comprenant au moins une fonction amide. Ces complexes permettent d'effectuer l'oxydation par l'air des mercaptans contenus dans les fractions pétrolières en disulfures correspondants en l'absence d'alcali dans des conditions particulièrement intéressantes.

Le complexant utilisé appartient à l'une des familles suivantes:

1. Les amides de l'acide picolinique ou de l'un de ses dérivés avec une amine primaire constituant un ligand bidenté [LH] de formule générale suivante:

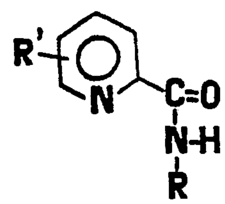

[LH] (1)

dans laquelle R est un groupe alkyle, aryle, aralkyle ou alkylaryle comprenant de 1 à 20 atomes de carbone et de préférence 1 à 15, R' représente un ou plusieurs atomes d'hydrogène ou un ou plusieurs groupes alkyle, aryle, aralkyle ou alkylaryle comprenant de 1 à 20 atomes de carbone, et de préférence 1 à 15, ou un ou plusieurs substituants halogène (chlore, brome, iode), nitro, amino, carboxylate ou sulfonate. Le ou les substituants R' peuvent occuper l'une quelconque des positions 3, 4, 5 ou 6 du noyau pyridinique.

Si l'on désigne donc par LH l'un de ces ligands bidentés, où H représente l'hydrogène labile de la fonction amide, les complexes selon l'invention ont alors pour formule générale ML ou $M(LH)_2X_2$ dans lesquelles M représente un métal de transition tel que de préférence le cobalt, le nickel, le fer, le cuivre, où le manganése et X un anion de préférence halogénure (chlorure, bromure, iodure), carboxylate, nitrate sulfate, carbonate, acétylacétonate.

2. Les diamides de l'acide picolinique ou de l'un de ses dérivés substitués avec l'ammoniac constituant un ligand tridenté de formule générale suivante:

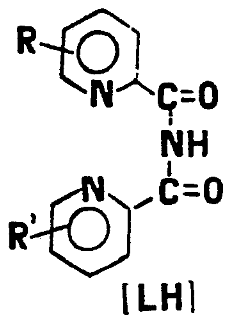

[LH] (2)

dans laquelle R et R', identiques ou différents, représentent chacun un ou plusieurs atomes d'hydrogène ou groupes alkyle, aryle, aralkyle, alkylaryle comprenant de 1 à 20 atomes de carbone et de préférence 1 à 15 ou des substituants halogènes, amines, nitro, carboxylates, sulfonates situés sur l'une ou plusieurs des positions 3, 4, 5 ou 6 du noyau pyridine.

Si l'on désigne par LH l'un de ces ligands tridentés, les complexes selon l'invention ont ici pour formule $ML_2$ ou $M(LH)_2X_2$ dans lesquelles M est un métal tel que le cobalt, le nickel, le fer, le cuivre ou le manganèse et X un anion de préférence halogénure, carboxylate, nitrate, sulfate, carbonate, acétylacétonate.

3. Les diamides de l'acide picolinique ou de l'un de ses dérivés substitués avec des composés possédant au moins deux fonctions amines primaires séparées entre elles par au moins deux atomes de carbone, constituant un ligand tétradenté de formule générale suivante:

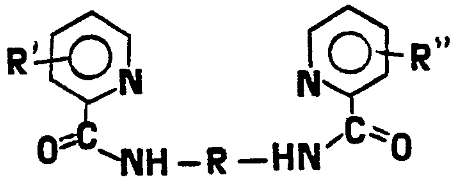

[$LH_2$]

dans laquelle R' et R'', identiques ou différents représentent chacun un ou plusieurs atomes d'hydrogène ou groupes alkyle, aryle, aralkyle, alkylaryle comprenant de 1 à 20 atomes de carbone, et de préférence 1 à 15, ou des substituants halogène, amines, nitro, carboxylates, sulfonates situés sur l'une ou plusieurs des positions 3, 4, 5 ou 6 du noyau pyridine.

Dans cette formule, R est un radical comportant au moins deux atomes de carbone choisi parmi l'un des groupes suivants:

- $CH_2$-$CH_2$- $\quad$ -$CH_2$-$CH_2$-NH-$CH_2$-$CH_2$-
- $CH_2$-$CH_2$-$CH_2$-
- $\overline{CH(CH_2)_4CH}$-

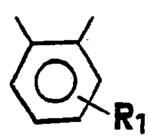

$R_1$ = alkyle, aryle, $NO_2$ halogène, $NH_2$, $SO_3H$, COOH...

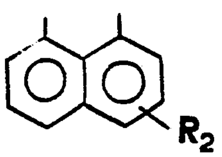

$R_2$ = alkyle, aryle, $NO_2$, halogène, $NH_2$, $SO_3$, COOH

Ces ligands tétradentés de formule $LH_2$ peuvent être préparés par réaction de deux équivalents du chlorure ou de l'ester de l'acide picolinique avec un équivalent de diamine correspondante, ou, ainsi qu'il est décrit dans l'article de D.J. BARNES, R.L. CHAPMAN, R.S. VAGG et E.C. WALTON dans Journal of Chemical and Engeneering Data, 1978, Vol. 23, p. 349, par réaction de l'acide picolinique avec la diamine en présence de triphénylphosphite.

Si l'on désigne par $LH_2$ l'un de ces ligands tridentés, les complexes selon l'invention ont ici pour formule ML ou $M(LH_2)X_2$ dans laquelle M représente un métal de transition (cobalt, cuivre, nickel, fer, manganèse) et X un anion de préférence halogène ou halogénure, carboxylate, sulfate, nitrate, carbonate, acétylacétonate. Ils peuvent être préparés directement par réaction du sel métallique avec le ligand tétradenté $LH_2$, par exemple selon la méthode décrite par R.L. CHAPMAN et R.S. VAGG dans Inorganica Chimica Acta, 1979, Vol. 33 p. 227.

On peut citer, à titre d'exemples non limitatifs de complexes particulièrement actifs pour l'adoucissement des coupes pétrolières les complexes Co(BPB), $Co(BPBH_2)CL_2$, $Co(BPBH_2)(OCOCH_3)_2$, Cu(BPB), $Cu(BPBH_2)Cl_2$, Ni(BPB), $Ni(BPBH_2)Cl_2$ où $BPBH_2$ représente le ligand tétradenté N,N'-bis (2'-pyridinecarboxamide)-1,2-benzène

et BPB le même ligand sous forme reprotonée, les complexes Cu(BPEN), $Cu(BPENH_2)Cl_2$, $Co(BPENH_2)Cl_2$, $Fe(BPENH_2)Cl_2$ où $BPENH_2$ représente le ligand tétradenté N,N'-bis (2'-pyridine carboxamide)-1,2 éthane, ainsi que les complexes $Co(DNAPH_2)Cl_2$, $Cu(DNAPH_2)Cl_2$ et $Mn(DPNAPH_2)$ où $DPNAPH_2$ représente le ligand tétradenté M,M'- (dipicolyl)-1,8 naphtalène diamine. Le complexe Co(BPB) peut se trouver sous la forme Co(BPB)nL' où L' est de l'eau ou de la pyridine ou toute molécule d'un solvant complexé utilisé, n étant égal par exemple à 1 ou 2. De même à titre d'exemples $Co(BPBH_2)Cl_2$ peut se trouver sous la forme $Co(BPBH_2)Cl_2$, $nH_2O$ et $Cu(BPBH_2)Cl_2$ être présent sous la forme $Cu(BPBH_2)Cl_2$, $nH_2O$ ou encore $Ni(BPBH_2)Cl_2$ se trouver sous la forme $Ni(BPBH_2)Cl_2$, $2H_2O$ ou Cu(BPEN) se trouver sous la forme $Cu(BPEN)H_2O$.

4. Les tétramides cycliques de l'acide dipicolinique ou de l'un de ses dérivés avec l'ammoniac, de formule:

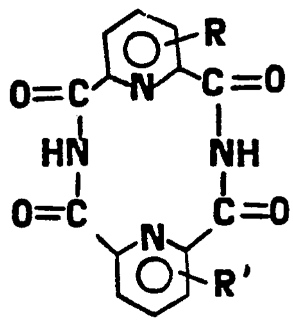

$[LH_2]$ (4)

dans laquelle R et R', identiques ou différents, représentent chacun un ou plusieurs atomes d'hydrogène, ou groupes alkyle, aryle, alkylaryle ou aralkyle comprenant de 1 à 20 atomes de carbone, ou substituants de type halogène, nitro, amino, carboxylate ou sulfonate en position 3,4 ou 5 du cycle pyridine.

Si l'on désigne par $LH_2$ l'un de ces composés de tétramide cyclique, les complexes selon l'invention ont pour formule ML ou $M(LH_2)X_2$ dans laquelle M représente un métal de transition (cobalt, cuivre, nickel, fer, manganèse) et X un anion, de préférence du type halogène ou halogénure, carboxylate, sulfate, nitrate, carbonate, acétylacétonate.

5. Les diamides de l'acide oxalique avec des aminopyridine ou quinoléine, tels que par exemple:

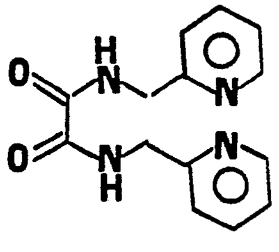

$[LH_2]$

(5)

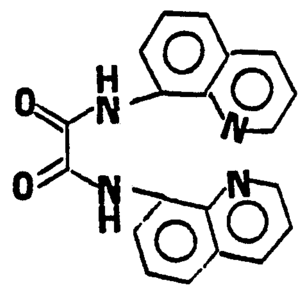

$[LH_2]$

(6)

ainsi que les diamides de l'acide phtalique ou de l'un de ses dérivés substitués avec au moins une aminopyridine ou une aminoquinoléine, (éventuellement substituées par des radicaux alkyle, aryle, alkylaryle, arylalkyle ou divers groupes halogène, nitro, amino, carboxylate ou sulfonate):

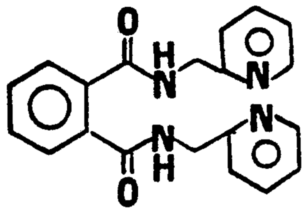

[LH2]

(7)

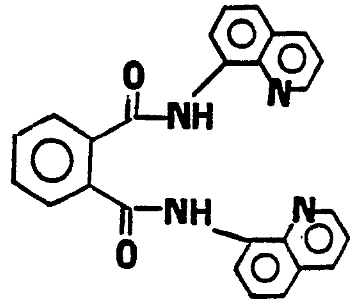

[LH2]

(8)

Les complexes selon l'invention ont alors ici pour formule ML ou $M(LH_2)X_2$ où M représente un métal de transition (cobalt, cuivre, nickel, fer, manganèse) et X un anion de préférence du type halogénure, halogène, carboxylate, sulfate, nitrate, carbonate, acétylacétonate.

Tous les complexes des ligands amides de formules (1) à (8) selon l'invention peuvent se préparer par réaction du sel ou complexe métallique avec le ligand considéré, ou à partir de ses constituants acide et amines. Ils peuvent être isolés sous forme pure ou laissés in situ dans la solution réactionnelle qui sera utilisée directement pour imprégner le support solide.

Comme support solide des complexes selon l'invention, on peut utiliser le charbon actif de préférence, mais également tout autre support solide approprié tel que les silices, les alumines, les silice-alumines, les alumino silicates, les zéolithes, les terres activées, les résines échangeuses de cation, parmi lesquelles on citera à titre d'exemples l'Amberlite A.15 ($RSO_3H$) ou IRC50 (R-COOH) (Marques déposées).

L'adoucissement est réalisé par percolation de la fraction pétrolière en présence d'oxygène ou d'air sur un lit catalytique fixe de support contenant sous forme supportée le complexe métallique selon l'invention. Aucune addition d'alcali tel que la soude aqueuse, la potasse ou l'ammoniaque n'est nécessaire.

Dans la mise en oeuvre de la réaction d'adoucissement, la température de réaction n'a pas un effet critique. On peut opérer à température ambiante, mais il est également possible d'opérer à des températures plus élevées, sans toutefois dépasser des températures de l'ordre de 120°C. D'autre part, la pression requise est généralement comprise entre environ 0,5 et 50 bars, et de préférence entre 1 et 30 bars environ (1 bar = 0,1 MPa). L'air est l'agent oxydant le plus approprié. Tout autre agent oxydant, tel que l'oxygène à l'état pur, est également utilisable de même que tout autre gaz ou mélange de gaz contenant de l'oxygène. Ce dernier peut être introduit dans le réacteur en quantités stoéchiométriques. Il est parfois préférable de l'utiliser en excès.

Le procédé de la présente invention permet d'éviter le prélavage de la charge et notamment son prétraitement en vue d'éliminer l'hydrogène sulfuré et la majeure partie des acides naphténiques qu'elle peut contenir. Le présent procédé permet également par rapport aux procédés classiques utilisant un composé alcalin, d'éviter l'emploi d'un décanteur, d'un filtre à sable et d'une pompe à soude ou à tout autre composé alcalin.

Les exemples suivants illustrent de façon non limitative la mise en oeuvre du procédé selon la présente invention.

## EXEMPLE 1.

Le complexe Co(phepia $H)_2Cl_2$ généralement utilisé sous la forme Co(phepia $H)_2Cl_2,4H_2O$ a été préparé selon la méthode décrite par M. NONOYAMA et K. YAMASAKI dans Inorganica Chimica Acta, 1969, vol. 3 p. 585 à partir du chlorure de cobalt (II) et de la N-phenyl-picolinamide ("phepia H") en solution dans l'eau. Le complexe ainsi obtenu est dissous dans l'eau puis percolé sur charbon actif de telle sorte que la teneur en métal de la solution d'imprégnation soit environ 1 % par rapport au charbon imprégné. Une fois lavé à l'eau et séché, le charbon contient 0,7 % de cobalt.

La charge à adoucir est placée dans un réservoir qui alimente le réacteur avec un appoint d'air. Les conditions opératoires de la réaction sont les suivantes:

- volume de catalyseur = 20 $cm^3$
- pression = 1 atmosphère (0,1 MPa)
- température = 20°C
- vitesse spatiale horaire de la charge (VVH) = 21/1 catalyseur/heure.

Une fois traité dans le réacteur, l'effluent est séparé de l'air qu'il contient dans un séparateur. On effectue alors un dosage de mercaptan résiduel qualitativement par un "doctor test" (plombite de sodium et fleur de

soufre) et quantitativement par coulométrie.

La charge à adoucir est constituée par un kérosène (160-300°C) contenant 700 ppm de soufre total et 140 ppm de soufre mercaptan. Elle est percolée en présence d'air directement sur le catalyseur supporté non préimprégné à la soude.

L'effluent est collecté pendant 50 heures et analysé pour sa teneur en mercaptan qui est trouvée égale à 2 ppm.

**EXEMPLE 2**

Le complexe Co(BPB) est préparé par réaction de l'acétate de cobalt avec le N,N'-bis (2'-pyridinecarboxamide)-1,2 benzène ($BPBH_2$) en phase aqueuse selon la méthode décrite par R.L. CHAPMAN et R.S VAGG, Inorganica Chimica Acta, 1979, vol. 33 p. 227. Le complexe obtenu est dissous dans l'éthanol à 90 % puis percolé sur charbon actif. Le catalyseur supporté sur charbon ainsi obtenu contient environ 0,5 % poids de cobalt.

L'adoucissement est réalisé dans les mêmes conditions que dans l'exemple 1 (20°C, pression atmosphérique, 20 $cm^3$ de catalyseur, VVH = 2) et avec la même charge à adoucir (kérosène contenant 140 ppm de soufre mercaptan).

L'analyse des effluents recueillis au bout de 100 h de fonctionnement indique un "doctor test" négatif et une teneur en mercaptans inférieure à 2 ppm, ce qui montre que l'adoucissement a été effectué dans des conditions satisfaisantes.

**EXEMPLE 3.**

Le complexe $Co(BPBH_2)(OCOCH_3)_2$ est préparé par réaction de l'acétate de cobalt avec le N,N'-bis (2'-pyridinecarboxamide)-1,2 benzène ($BPBH_2$) dans l'éthanol, selon la référence de l'exemple 2. La solution éthanolique obtenue est percolée sur charbon actif et fournit un catalyseur contenant environ 0,6 % poids de cobalt par rapport au poids de charbon.

L'adoucissement est réalisé dans les mêmes conditions et avec la même charge que dans l'exemple 1 pendant 300 heures et fournit un kérosène adouci dont le "doctor test" est négatif et dont la teneur en mercaptan est inférieure à 2 ppm.

**EXEMPLE 4**

Le même catalyseur que dans l'exemple 3 $[Co(BPBH_2)(OCOCH_3)_2]$ sur charbon est utilisé pour adoucir une essence constituée d'un mélange 50/50 en volume d'essence légère et d'essence lourde issu d'un craqueur catalytique. Cette charge, dont la densité est de 0,779, contient 34 % de composés aromatiques, 27 % d'oléfines et 39 % d'hydrocarbures saturés. Elle contient en outre 800 ppm de phénols, 200 ppm de soufre mercaptan et 2000 ppm de soufre total.

L'adoucissement est réalisé dans les mêmes conditions que dans l'exemple 3 pendant 200 heures, et fournit une essence adoucie dont le "Doctor Test" est négatif et dont la teneur en mercaptan est inférieure à 2,5 ppm.

**EXEMPLE 5**

Le complexe $Cu(BpBH_2)Cl_2$ est préparé par réaction du chlorure cuivrique avec le N,N'-bis(2'-pyridine carboxamide)-1,2 benzène ($BPBH_2$) dans l'éthanol selon la référence de l'exemple 2. La solution éthanolique obtenue est percolée sur lit fixe de charbon actif et fournit un catalyseur contenant environ 0,4 % de cuivre. L'adoucissement est réalisé dans les mêmes conditions et avec la même charge que dans l'exemple 1 pendant 70 heures, et fournit un kérosène adouci dont le "Doctor Test" est négatif et dont la teneur en mercaptan est inférieure à 4 ppm.

**EXEMPLE 6**

Le complexe $Co(BPENH_2)Cl_2$, ici présent sous la forme $Co(BPENH_2)Cl_2$, ($2{,}5H_2O$) est obtenu selon la méthode décrite par D.J.BARNER R.L. CHAPMAN, F.S STERHENS et R.S VAGG dans Inorganica Chimica Acta, 1981 vol. 51 p. 155 par réaction du chlorure de cobalt avec le ligand N,N'-bis(2'-pyridinecarboxamide) 1,2 éthane

($BPENH_2$) dans l'éthanol. La solution éthanolique obtenue est percolée sur un lit fixe de charbon actif et fournit un catalyseur contenant environ 0,8 % de cobalt.

L'adoucissement est réalisé dans les mêmes conditions et avec la même charge que dans l'exemple 1 pendant 200 heures, et fournit un kérosène adouci dont le "Doctor Test" est négatif et dont la teneur en mercaptan est inférieure à 2,5 ppm.

**EXEMPLE 7**

Le complexe $Cu(DPNAPH_2)Cl_2$ est obtenu selon la méthode décrite par T.F. ZAFIROPOULOS, S.P. PERLEPES, P.V. IONNAOU, J.M. TSANGARIS et A.J. GALINOS dans Z. NATURFORSCHUNG, 1981, Vol. 36b p.87 par réaction du chlorure cuivrique avec le ligand N,N'-(dipicolyl)-1,8-naphtylamine ($DPNAPH_2$), dans l'éthanol. La solution éthanolique du complexe obtenu est percolée sur charbon actif et fournit un catalyseur contenant environ 0,3 % de cuivre.

L'adoucissement est réalisé dans les mêmes conditions et avec la même charge que dans l'exemple 1 pendant 150 heures, et fournit un kérosène adouci dont le "Doctor Test" est négatif et dont la teneur en mercaptan est inférieure à 2 ppm.

**EXEMPLE 8 à 17**

On a répété successivement l'exemple 3 en utilisant divers catalyseurs indiqués au tableau 1. Dans tous les cas, on a obtenu une teneur en mercaptans inférieure à 2,5 ppm.

**TABLEAU 1.**

| | |
|---|---|
| Exemple 8 | $Co(BPBH_2)Cl_2$ |
| " 9 | Cu(BPB) |
| " 10 | Ni(BPB) |
| " 11 | $Ni(BPBH_2)Cl_2$ |
| " 12 | $Fe(BPBH_2)Cl_2$ |
| " 13 | Cu(BPEN) |
| " 14 | $Cu(BPENH_2)Cl_2$ |
| " 15 | $Fe(BPENH_2)Cl_2$ |
| " 16 | $Co(DPNAPH_2)Cl_2$ |
| " 17 | $Mn(DPNAPH_2)$ |

**EXEMPLES 18 à 22**

On a répété les exemples 8 ($Co(BPBH_2)Cl_2$), 9 (Cu BPB), 14 ($Cu(BPENH_2)Cl_2$) en utilisant comme support de l'amberlite A.15. On a obtenu dans tous les cas, une teneur en mercaptans inférieure à 2,5 ppm.

**Revendications**

1. Procédé d'adoucissement d'une charge d'hydrocarbures contenant des produits soufrés, par percolation, à une temperature inférieure à 120°C de ladite charge sur un lit fixe de catalyseur, le procédé étant caractérisé en ce que le catalyseur est à base d'au moins un complexe constitué d'au moins un chélate d'au moins un métal avec au moins un ligand multidenté comportant au moins une fonction amide, ledit complexe étant déposé sur un support, ledit complexe étant choisi dans le groupe constitué par:

- les complexes de formules générales $ML_2$ ou $M(LH)_2X_2$ dans lesquelles M est un métal de transition, X un anion, L provenant d'un ligand bidenté [LH] à base d'un amide de l'acide picolinique ou de l'un de ses dérivés avec une amine primaire, [LH] ayant pour formule générale:

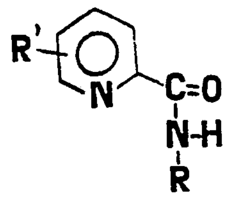

où R est un groupement alkyle, aryle, aralkyle ou alkylaryle comprenant de 1 à 20 atomes de carbone par molécule et R' représente soit un ou plusieurs atomes d'hydrogène soit un ou plusieurs groupes alkyle, aryle, aralkyle ou alkylaryle comprenant de 1 à 20 atomes de carbone, soit un ou plusieurs substituants de type halogène, nitro, amino, carboxylate ou sulfonate, en position 3, 4, 5 ou 6 du noyau pyridinique.

- les complexes de formules générales $ML_2$ ou $M(LH)_2X_2$ dans lesquelles M est un métal de transition, X un anion, L provenant d'un ligand [LH] tridenté à base d'un diamide de l'acide picolinique ou de l'un de ses dérivés substitué avec l'ammoniac, [LH] ayant pour formule générale:

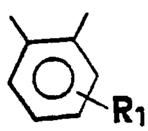 et 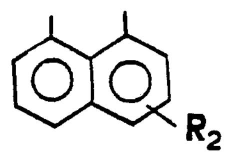

où $R_1$ est un radical alkyle, aryle ou un groupe $NO_2$, halogène, $NH_2$, $SO_3H$, COOH et où $R_2$ est un radical alkyle, aryle ou un groupe $NO_2$, halogène, $NH_2$, $SO_3H$, COOH.

- les complexes de formules générales ML ou $M(LH_2)X_2$ dans lesquelles M est un métal de transition, X un anion, L provenant d'un ligand $[LH_2]$ à base d'un tétramide cyclique de l'acide dipicolinique ou de l'un de ses dérivés avec l'ammoniac, de formule:

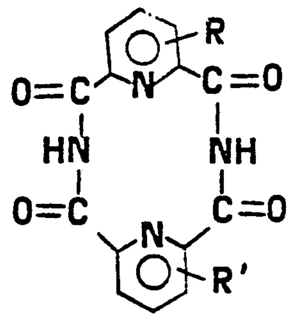

où R et R' identiques ou différents représentent chacun un ou plusieurs atomes d'hydrogène, ou un ou plusieurs groupes alkyle, aryle, alkylaryle ou aralkyle comprenant de 1 à 20 atomes de carbone, ou substituants de type halogène, nitro, amino, carboxylate ou sulfonate en position 3, 4 ou 5 du cycle pyridine.

- et les complexes de formules générales ML ou $M(LH_2)X_2$ où M représente un métal de transition et X un anion et où L provient d'un ligand de formule $[LH_2]$ à base d'un diamide de l'acide oxalique ou de l'acide phtalique ou de l'un de ses dérivés, substitué avec une aminopyridine ou une aminoquinoléïne de formules:

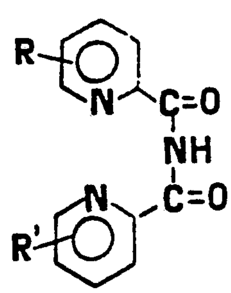

dans laquelle R et R' identiques ou différents représentent chacun un ou plusieurs atomes d'hydrogène ou groupes alkyle, aryle, aralkyle, alkylaryle comprenant de 1 à 20 atomes de carbone ou substituants halogène, amine, nitro, carboxylate, sulfonate, en position 3, 4, 5 ou 6 du noyau pyridine.

- les complexes de formules générales ML ou $M(LH_2)X_2$ dans lesquelles M est un métal de transition, X un anion, L provenant d'un ligand $[LH_2]$ tétradenté à base d'un diamide de l'acide picolinique ou de l'un de ses dérivés substitué avec des composés possédant au moins deux fonctions amines primaires séparées entre elles par au moins deux atomes de carbone, $[LH_2]$ ayant pour formule générale:

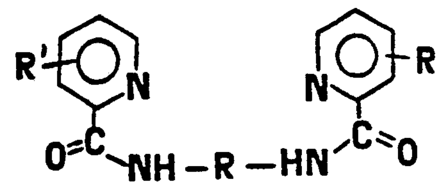

dans laquelle R' et R'' identiques ou différents représentent chacun un ou plusieurs atomes d'hydrogène ou groupes alkyle, aryle, aralkyle, alkylaryle, comprenant 1 à 20 atomes de carbone ou substituants de type halogéne, nitro, amino, carboxylate, sulfonate, en position 3, 4, 5 ou 6 du noyau pyridine, R est un radical comportant au moins deux atomes de carbone et choisi dans le groupe constitué par $CH_2$-$CH_2$, $CH_2$-$CH_2$-$CH_2$, -CH-$(CH_2)_4$-CH-

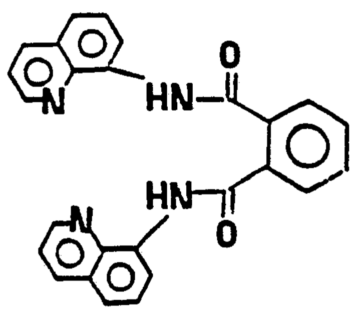

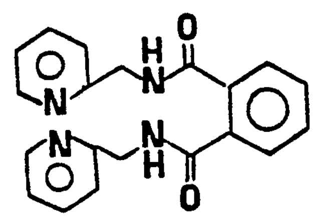

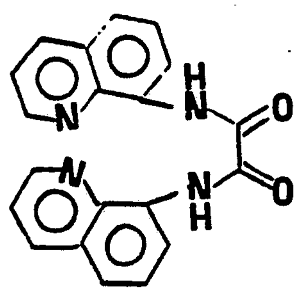

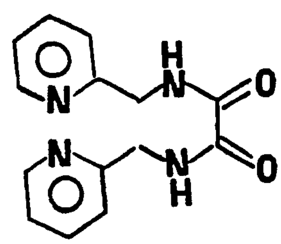

2. Procédé selon la revendication 1 dans lequel le métal de transition est choisi dans le groupe constitué par le cobalt le nickel, le fer, le cuivre et le manganèse.

3. Procédé selon la revendication 1 dans lequel ledit support est choisi dans le groupe constitué par le charbon, les silices, les alumines, les silice-alumines, les alumino-silicates, les zéolithes et les résines échangeuses d'ions.

4. Procédé selon l'une des revendications 1 à 3 effectué en l'absence d'un composé alcalin.

**Patentansprüche**

1. Verfahren zum Süßen von Schwefelverbindungen enthaltenden Kohlenwasserstoff-Chargen durch Perkolation dieser Chargen bei einer Temperatur unterhalb von 120°C über einem Festbettkatalysator, dadurch gekennzeichnet, daß der Katalysator ein solcher auf der Basis wenigstens eines Komplexes, bestehend aus wenigstens einem Chelat aus wenigstens einem Metall mit wenigstens einem vielzähnigen Liganden, der wenigstens eine Amidfunktion enthält, wobei dieser Komplex auf einem Träger abgeschieden ist und aus folgenden Komplexen ausgewählt ist:

- Komplexe der allgemeinen Formel $ML_2$ oder $M(LH)_2X_2$, worin M ein Übergangsmetall und X ein Anion sind

und L von einem zweizähnigen Liganden [LH] auf der Basis eines Amids der Pikolinsäure oder eines ihrer Derivate mit einem primären Amin stammt, wobei [LH] der allgemeinen Formel

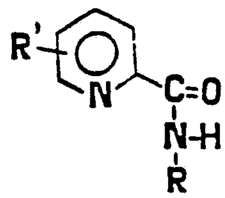

entspricht, worin R eine Alkyl-, Aryl-, Aralkyl- oder Alkylarylgruppe mit 1 bis 20 Kohlenstoffatomen je Molekül ist und R' ein oder mehrere Wasserstoffatome, ein oder mehrere Alkyl-, Aryl-, Aralkyl- oder Alkylarylgruppen mit 1 bis 20 Kohlenstoffatomen, oder ein oder mehrere Substituenten vom Halogen-, Nitro-, Amino-, Carboxylat- oder Sulfonattyp in 3-, 4-, 5- oder 6-Stellung des Pyridinkerns darstellt,

- Komplexe der allgemeinen Formel $ML_2$ oder $M(LH)_2X_2$, worin M ein Übergangsmetall und X ein Anion sind und L von einem dreizähnigen Liganden [LH] auf der Basis eines Diamids der Pikolinsäure oder eines ihrer Derivate mit Ammoniak stammt, wobei [LH] der allgemeinen Formel

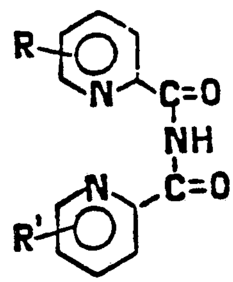

entspricht, worin R und R' gleich oder verschieden sind und jedes ein oder mehrere Wasserstoffatome oder Alkyl-, Aryl-, Aralkyl- oder Alkylarylgruppen mit 1 bis 20 Kohlenstoffatomen oder Substituenten vom Halogen-, Amin-, Nitro-, Carboxylat- oder Sulfonattyp in 3-, 4-, 5- oder 6-Stellung des Pyridinkerns darstellen,

-Komplexe der allgemeinen Formel ML oder $M(LH_2)X_2$, worin M ein Übergangsmetall und X ein Anion sind, L von einem vierzähnigen Liganden [$LH_2$] auf der Basis eines Diamids der Pikolinsäure oder eines ihrer Derivate stammt, die mit Verbindungen substituiert sind, welche wenigstens zwei durch mindestens zwei Kohlenstoffatome getrennte primäre Aminfunktionen aufweisen, wobei [$LH_2$] der allgemeinen Formel

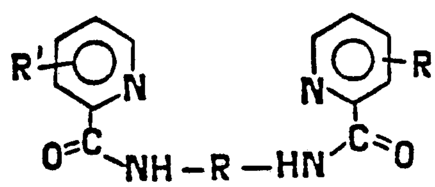

entspricht, worin R' und R'' gleich oder verschieden sind und jedes ein oder mehrere Wasserstoffatome oder Alkyl-, Aryl-, Aralkyl- oder Alkylarylgruppen mit 1 bis 20 Kohlenstoffatomen oder Substituenten vom Halogen-, Nitro-, Amino-, Carboxylat- oder Sulfonattyp in 3-, 4-, 5- oder 6- Stellung des Pyridinkerns darstellt, R ein Rest mit wenigstens zwei Kohlenstoffatomen, ausgewählt aus der Gruppe, gebildet durch $CH_2$-$CH_2$, $CH_2$-$CH_2$-$CH_2$, -CH-$(CH_2)_4$-CH-

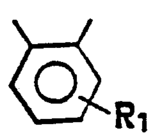

und ,

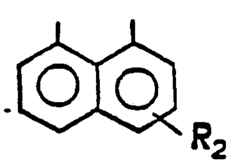

ist, worin $R_1$ ein Alkyl- oder Arylrest oder eine $NO_2$-Gruppe, Halogengruppe, $NH_2$-Gruppe, $SO_3H$-Gruppe, COOH-Gruppe ist und worin $R_2$ ein Alkyl- oder Arylrest oder eine $NO_2$-Gruppe, Halogengruppe, $NH_2$-Gruppe, $SO_3H$-Gruppe oder COOH-Gruppe ist,

- Komplexe der allgemeinen Formel ML oder $M(LH_2)X_2$, worin M ein Übergangsmetall und X ein Anion sind,

wobei L von einem Liganden $[LH_2]$ auf der Basis eines zyklischen Tetraamids der Dipikolinsäure oder eines ihrer Derivate mit Ammoniak der Formel

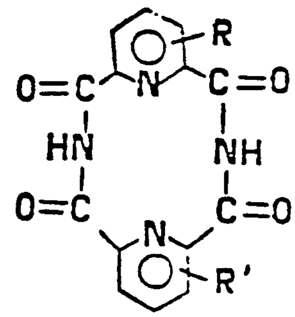

stammt, worin R und R' gleich oder verschieden sind und jedes ein oder mehrere Wasserstoffatome oder ein oder mehrere Alkyl-, Aryl-, Alkylaryl- oder Aralkylgruppen mit 1 bis 20 Kohlenstoffatomen oder Substituenten vom Halogen-, Nitro-, Amino-, Carboxylatoder Sulfonattyp in 3-, 4-, oder 5-Stellung des Pyridinrings darstellt,

- und Komplexe der allgemeinen Formel ML oder $M(LH_2)X_2$, worin M ein Übergangsmetall und X ein Anion sind, und worin L von einem Liganden der Formel $[LH_2]$ auf der Basis eines Diamids der Oxalsäure oder eines Diamids der Phtalsäure oder eines ihrer Derivate, substituiert mit Aminopyridin oder Aminochinolin der Formeln

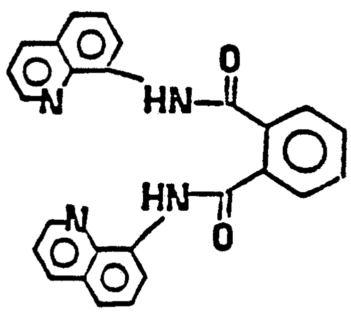

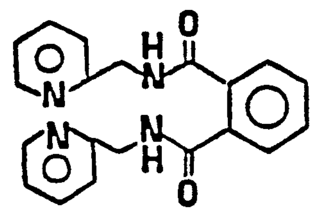

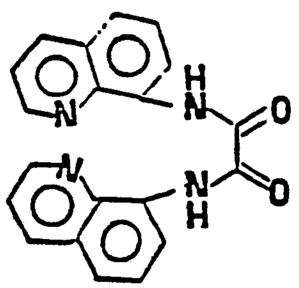

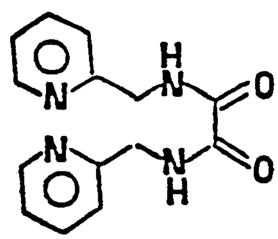

stammt.

2. Verfahren nach Anspruch 1, dadurch gekennzeichnet, daß das Übergangsmetall aus der Gruppe Kobalt, Nickel, Eisen, Kupfer und Mangan ausgewählt wird.

3. Verfahren nach Anspruch 1, dadurch gekennzeichnet, daß der Träger aus der Gruppe Kohlenstoff, Siliciumdioxide bzw. Kieselsäuren, Aluminiumoxide, Siliciumdioxide bzw. Kieselsäuren/ Aluminiumoxide, Aluminiosilikate, Zeolithe und Ionenaustauscherharze ausgewählt wird.

4. Verfahren nach einem der Ansprüche 1 bis 3, dadurch gekennzeichnet, daß es in Abwesenheit einer alkalischen Verbindung durchgeführt wird.

**Claims**

1. A method of softening a batch of hydrocarbons containing sulphur products, by percolation of the said batch over a fixed bed of catalyst at a temperature below 120°C, the method being characterised in that the catalyst is based on at least one complex consisting of at least one chelate or at least one metal with at least

one multi-toothed ligand comprising at least one amide function, the said complex being deposited on a carrier, the said complex being chosen from the group consisting of:

- complexes to general formulae $ML_2$ or $M(LH)_2X_2$ in which M is a transition metal, X an anion, L emanating from a double-toothed ligand [LH] based on an amide of picolinic acid or one of its derivatives with a primary amine, [LH] having as a general formula:

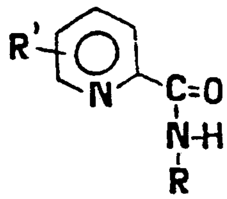

in which R is an alkyl, aryl, arylkyl or alkylaryl group comprising 1 to 20 carbon atoms per molecule and R′ represents either one or a plurality of hydrogen atoms or one or a plurality of alkyl, aryl, arylkyl or alkylaryl groups comprising 1 to 20 carbon atoms, or one or a plurality of substituents of the halogen, nitro, amino, carboxylate or sulphonate type in position 3, 4, 5 or 6 of the pyridine nucleus;

- the complexes to general formulae $ML_2$ or $(M(LH)_2X_2$ in which M is a transition metal, X an anion, L emanating from a triple-toothed ligand [LH] based on a diamide of picolinic acid or one of its derivatives substituted with ammonia, [LH] having as a general formula:

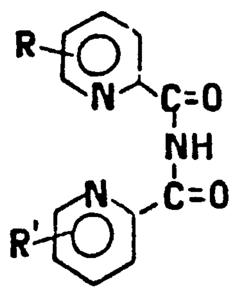

in which R and R′, identical or different, each represents one or a plurality of hydrogen atoms or alkyl, aryl, aralkyl, alkylaryl groups comprising 1 to 20 carbon atoms or halogen, amine, nitro, carboxylate, sulphonate substituents in position 3, 4, 5 or 6 in the pyridine nucleus.

- the complexes to general formulae ML or $M(LH_2)X_2$ in which M is a transition metal, X an anion, L originating from a tetra- toothed ligand $[LH_2]$ based on a diamide of picolinic acid or one of its derivatives substituted with compounds comprising at least two primary amine functions separated from each other by at least two carbon atoms $[LH_2]$ having as its general formula:

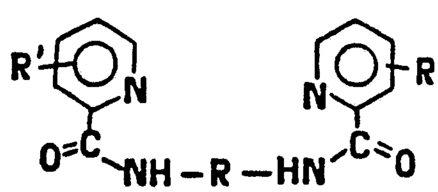

in which R′ and R″, identical or different, each represent one or a plurality of hydrogen atoms or alkyl, aryl, aralkyl, alkylaryl groups comprising 1 to 20 carbon atoms or substituents of the halogen, nitro, amino, carboxylate, sulphonate type in position 3, 4, 5 or 6 in the pyridine nucleus, R is a radical comprising at least two carbon atoms and chosen from the group consisting of $CH_2CH_2$, $CH_2$-$CH_2CH_2$, -CH-$(CH_2)_4$-CH-

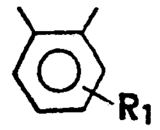

and

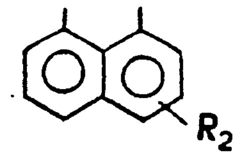

in which $R_1$ is an alkyl, aryl radical or an $NO_2$ halogen, $NH_2$, $SO_3H$, COOH group and in which $R_2$ is an alkyl, aryl radical or an $NO_2$ halogen, $NH_2$, $SO_3H$, COOH group;

- the complexes to general formulae ML or $M(LH_2)X_2$ in which M is a transition metal, X an anion, L originating from a ligand $[LH_2]$ based on a cyclic tetramide of dipicolinic acid or one of its derivatives with ammonia to the formula:

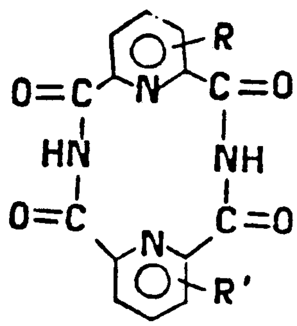

in which R and R', identical or different, each represent one or a plurality of hydrogen atoms or one or a plurality of alkyl, aryl, alkylaryl or aralkyl groups comprising 1 to 20 carbon atoms, or substituents of the halogen, nitro, amino, carboxylate or sulphonate type in position 3, 4 or 5 of the pyridine cycle;

- and complexes to general fomulae ML or $M(LH_2)X_2$ in which M represents a transition metal and X an anion and in which L originates from a ligand to formula $[LH_2]$ based on a diamide of oxalic acid or of phthalic acid or one of its derivatives, substituted with an amino pyridine or an amino quinoline to the formulae:

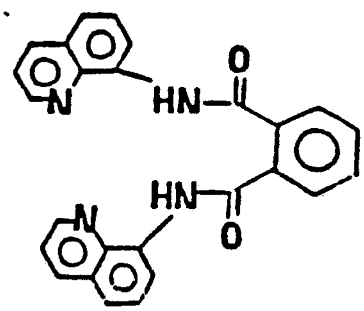

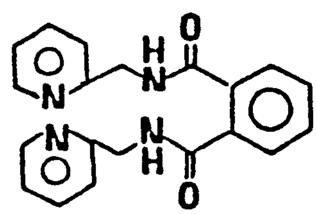

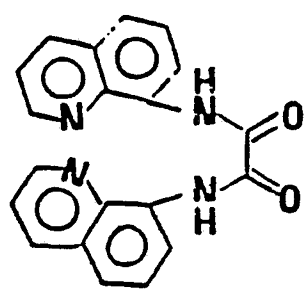

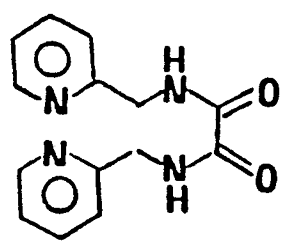

2. A method according to Claim 1 in which the transition metal is chosen from the group consisting of cobalt, nickel, iron, copper and manganese.

3. A method according to Claim 1 in which the said carrier is chosen from the group consisting of charcoal, silicas, aluminas, silico-aluminas, alumin-silicates, zeolithes and iron exchanger resins.

4. A method according to one of Claims 1 to 3 performed in the absence of an alkaline compound.